## Europäisches Patentamt
## European Patent Office
## Office européen des brevets

(11) Numéro de publication: **0 011 573**
**B1**

(12) **FASCICULE DE BREVET EUROPEEN**

(45) Date de publication du fascicule de brevet: 23.09.81

(51) Int. Cl.³: **C 02 F 11/02, C 02 F 3/26**

(21) Numéro de dépôt: 79400874.8

(22) Date de dépôt: 14.11.79

(54) Procédé de traitement des boues de fosses septiques.

(30) Priorité: 20.11.78 FR 7832640

(43) Date de publication de la demande:
28.05.80 Bulletin 80/11

(45) Mention de la délivrance du brevet:
23.09.81 Bulletin 81/38

(84) Etats Contractants Désignés:
AT BE CH DE FR GB IT LU NL SE

(56) Documents cités:
CH - A - 602 498
DE - A - 2 105 420
DE - A - 2 216 917
FR - A - 2 205 484
FR - A - 2 340 277
US - A - 2 615 842
US - A - 4 094 774

(73) Titulaire: L'AIR LIQUIDE, SOCIETE ANONYME POUR L'ETUDE ET L'EXPLOITATION DES PROCEDES GEORGES CLAUDE
75, Quai d'Orsay
F-75321 Paris Cedex 07 (FR)

(84) BE CH DE FR GB LU NL SE AT

(73) Titulaire: SIO-SOCIETA PER L'INDUSTRIA DELL'OSSIGENO A DI ALTRI GAS
Via Capecalatro 69
I-20.148 Milan (IT)

(84) IT

(72) Inventeur: Laederich, Thierry
8, rue de Jarente
F-75004 Paris (FR)
Inventeur: Formaggio, Paolo
10, rue Nazario Sauro
Biella (IT)

(74) Mandataire: Leclercq, Maurice et al,
L'AIR LIQUIDE SOCIETE ANONYME POUR L'ETUDE ET L'EXPLOITATION DES PROCEDES GEORGES CLAUDE 75, Quai d'Orsay
F-75321 Paris Cedex 7 (FR)

Courier Press, Leamington Spa, England.

## Procédé de traitement des boues de fosses septiques

L'invention concerne un procédé de traitement des boues de fosses septiques qui résultent de la vidange périodique, environ tous les trois ans, des fosses septiques, cela afin d'assurer l'épuration correcte.

Pour se débarrasser de ces boues, on a proposé de les injecter directement dans le bassin d'installations existantes de traitement d'eaux usées, mais cela n'est guère possible en général, car ces installations sont déjà souvent sous-dimensionnées, en sorte qu'elles ne peuvent supporter une charge supplémentaire particulièrement lourde en ce qui concerne les boues de fosses septiques, qui présentent des caractéristiques de "matières sèches", de "matières volatiles", de "demandes biologiques en oxygène" (D.B.O.), de "demandes chimiques en oxygène" (D.C.O.) extrêmement élevées. En outre, bien entendu, un tel traitement surajouté à un traitement classique d'eaux usées conduit à des dégagements d'odeurs nauséabondes à l'endroit des installations de traitement.

Pour tenter de pallier ces difficultés, on a également proposé d'introduire les boues de fosses septiques dans la chaîne terminale de traitement des boues décantées d'une station d'épuration des eaux usées, mais cela présente également des difficultés non seulement de dégagement d'odeurs, comme précédemment, mais surtout de filtrabilité, nécessitant des traitements onéreux au filtre presse.

On a également proposé, dans la demande de brevet français 2.340.277 de stabiliser les boues de fosses septiques par un gaz riche en oxygène pour diminuer leur charge organique à un niveau qui puisse être surmonté dans les installations ultérieures de traitement et à cet effet, on les soumet à un traitement relativement long prévoyant une phase initiale avec une teneur en oxygène dissous d'abord de 0 mg/l à 1—2 mg/l, puis de 1 à 5 mg/litre.

La présente invention a pour objet un procédé de traitement des boues de fosses septiques par oxydation chimique et biochimique permettant de les rendre non seulement décantables ou filtrables, mais également inodores et par là même autorisant, d'une part l'introduction des boues de fosses septiques traitées et décantées dans la chaîne de traitement de boues décantées d'une installation de traitement biologique d'eaux usées, d'autre part l'introduction du filtrat ou "surnageant" dans le bassis de traitement de cette même installation.

L'invention s'intéresse exclusivement aux boues de fosses septiques ayant les caractéristiques suivantes:

· matières sèches : 6 à 40 kg/m³

. matières volatiles : 65 à 80 % des matières sèches

· DBO$_{(5)}$ : 5 à 15 kg/m³

· DCO (bichromate) : 10 à 45 kg/m³,

du genre où l'on soumet les dites boues de fosses septiques ou matières de vidanges à un traitement d'activation biologique avec un gaz ayant une teneur élevée en oxygène d'au moins 50 % en volume pendant une durée d'au moins 5 heures, caractérisé en ce qu'au début du traitement on ensemence les boues de fosses septiques à traiter avec une boue activée, provenant d'une station de traitement biologique des eaux usées par le procédé dit des boues activées, ayant une teneur en matière sèche de 6 à 15 kg par m³, le taux d'"ensemencement étant au minimum de 0,6 kg de matière sèche par m³ de boue à traiter, et en ce que les dites boues de fosse septique ensemencées sont soumises audit traitement d'oxydation biologique avec une énergie de brassage et un débit dudit gaz à teneur élevée en oxygène tels que la teneur en oxygène dissous dans les dites boues de fosses septiques est d'au moins 10 g/m³, et en ce qu'on procède à une décantation continue des boues de fosses septiques traitées, produisant, d'une part, une boue biologique décantée ayant un indice de Mohlman comprise entre 30 et 60 et un filtrat clair ayant une DBO de 0,3 à 2,5 kg/m³ et une DCO de 0,5 à 4 kg/m³, la quantité d'oxygène introduite étant inférieure à 0,5 kg par kg de matière sèche introduite.

On constate que le traitement selon l'invention permet globalement pour le filtrat de diviser par un facteur de l'ordre de 10 la DBO et la DCO des boues des fosses septiques en ramenant ces valeurs à celles généralement rencontrées pour les eaux usées.

Selon une forme préférentielle de l'invention, la teneur en oxygène dissous dans les boues de fosses septiques en cours de traitement est comprise entre 15 et 25 g/m³. Cette teneur particulièrement élevée est rendue possible grâce à l'introduction d'un gaz particulièrement riche en oxygène et, sans cette teneur élevée en oxygène dissous, les résultats escomptés ne seraient pas atteints. Egalement, la durée de traitement est particulièrement longue, malgré l'importance de la teneur en oxygène dissous et elle s'étage, de façon préférentielle entre 12 et 24 heures.

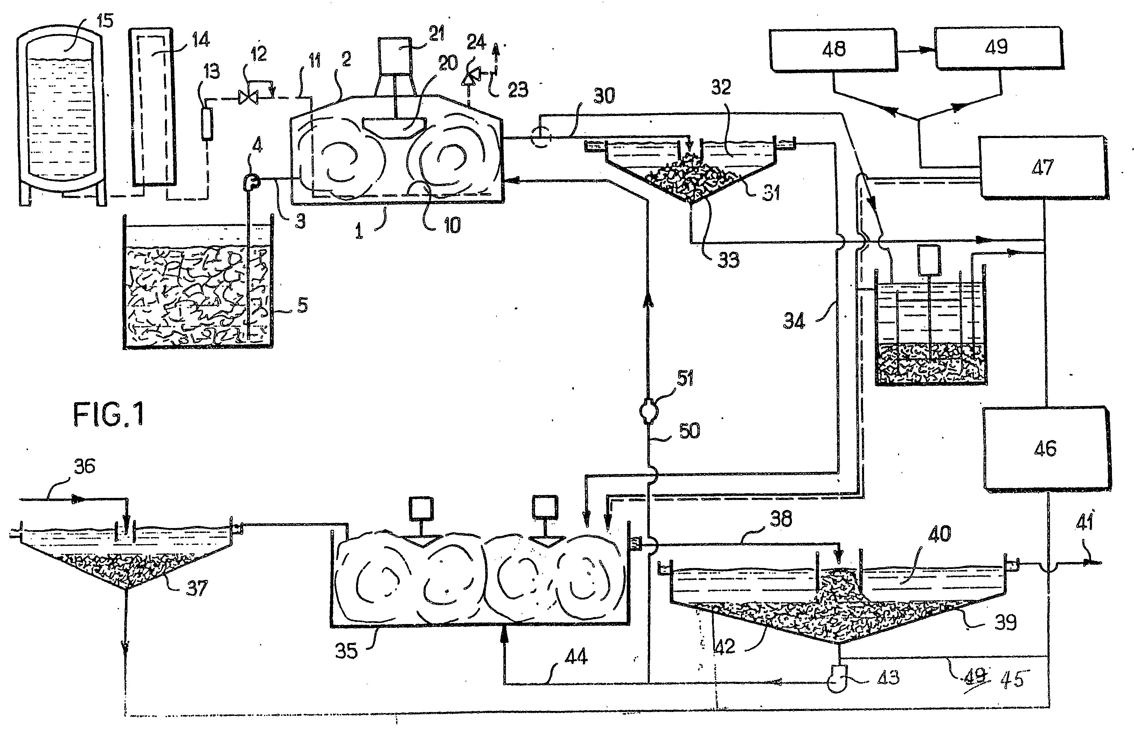

L'invention concerne également une installation de traitement des boues de fosses septiques mettant en oeuvre le procédé décrit ci-dessus et dont quelques exemples sont maintenant décrits en référence aux figures 1 à 4 qui représentent en vue schématique différentes installations mettant en oeuvre le procédé selon l'invention.

En se référant à la figure 1, un réacteur 1 de traitement des boues de fosses septiques fermé par un couvercle 2 reçoit par une canalisation 3 à pompe 4, un débit de boues de fosses septiques prélevées dans un bassin de stockage 5. A l'intérieur du réacteur 1, est agencé un moyen de diffusion 10 raccordé par une canalisation 11 à une vanne régulatrice 12 et débimètre 13 à la sortie d'un vaporiseur d'oxygène 14 dont l'entrée est raccordée à un réservoir de stockage 15 d'oxygène liquide.

La dissolution de l'oxygène dans les boues de fosses septiques est assurée et uniformisée par un organe de brassage 20 à moteur 21. La dimension du réacteur 1 et le débit de la pompe 4 sont tels que les boues des fosses septiques séjournent au moins 5 heures et de préférence de 12 à 24 h dans le réacteur 1. Dans le cas présent, le gaz injecté est de l'oxygène pur et l'énergie de brassage du moyen de brassage 20 ainsi que le débit d'oxygène réglé par la vanne régulatrice 12 sont tels que la teneur en oxygène dissous dans les boues en cours de traitement est d'au moins 10 g/m³ et de préférence comprise entre 15 et 25 g/m³. Pour permettre le dégagement des produits gazeux de la réaction tel que le gaz carbonique et l'azote, il est prévu à l'endroit du couvercle 2 une conduite 23 de mise à l'air à soupape 24. Les boues de fosses septiques traitées sont ensuite envoyées par une canalisation 30 à un décanteur 31 permettant de dégager un filtrat ou "surnageant" 32 et une boue décantée de fosses septiques 33. Le filtrat 32 ayant une DCO et une DBO comprises entre 1000 et 2000 g/m³ et 300 à 700 g/m³ respectivement est envoyé par une canalisation 34 directement dans un bassin de traitement 35 d'une installation biologique de traitement des eaux usées arrivant en 36 via un décanteur primaire 37, tandis que les eaux traitées sont envoyées par une canalisation 38 dans un décanteur final 39 permettant de séparer une eau claire 40 renvoyée à la rivière par une conduite 41 et des boues activées 42 dont une partie est recyclée par une pompe 43 et une canalisation 44 dans le bassin de traitement 35, et dont une partie excédentaire est éliminée par une conduite 45 vers une installation de traitement des boues comprenant un bassin de stabilisation des boues 46, un appareil de déshydratation mécanique des boues 47, les boues étant ensuite soit incinérées en 48, soit déchargées en 49.

Une partie des boues activées renvoyées par la pompe 43 est, au moins au début du traitement des boues de fosses septiques, renvoyée par une canalisation 50 à pompe doseuse 51 dans le réacteur de traitement des boues de fosses septiques 1, de façon à assurer l'ensemencement préalable des dites boues de fosses septiques. De préférence d'ailleurs, cette injection de boues activées dans le réacteur des boues de fosses septiques s'effectue de façon continue avec un taux de boues activées égal au minimum de 600 g de matière sèche par m³ de boues de fosses septiques délivrées dans le réacteur 1 par la pompe 4.

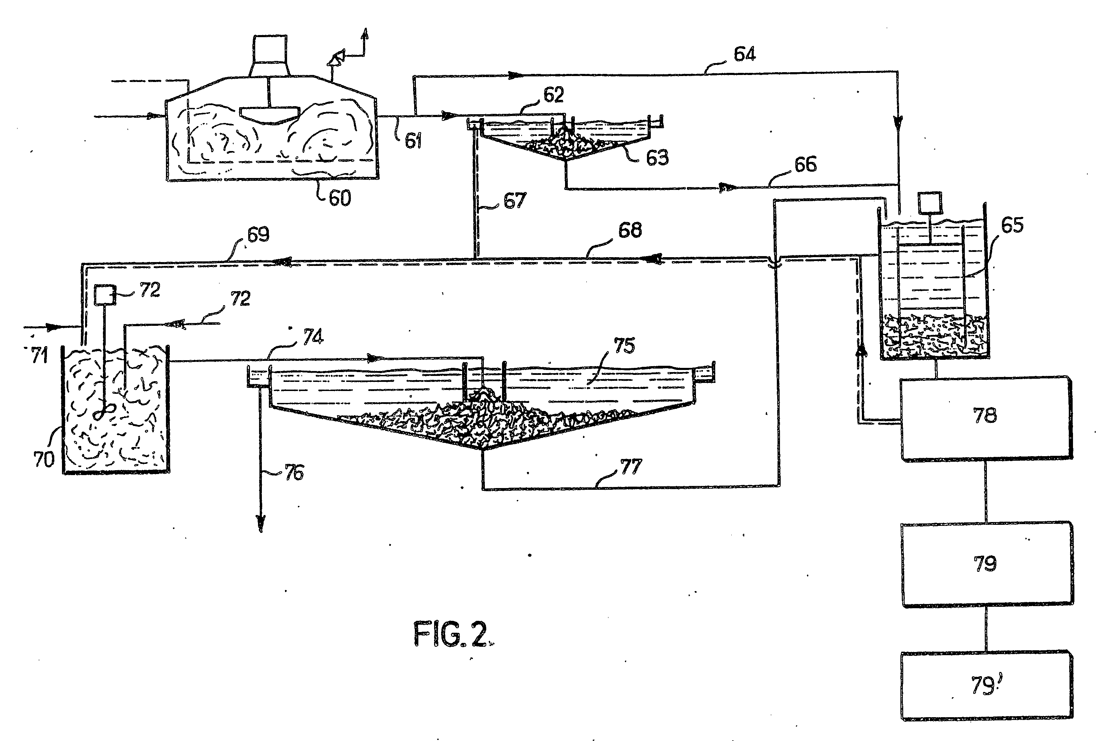

En se référant à la figure 2, on décrit maintenant une installation de traitement des boues de fosses septiques qui est associée à une station de traitement physico-chimique d'eaux usées. Le réacteur de traitement des boues de fosses septiques 60 délivre ici par une conduite 61 les boues de fosses septiques traitées dont une partie parvient via la conduite 62 à un décanteur 63 et une autre partie via une conduite 64 vers un épaississeur 65 qui reçoit également par une conduite 66 les boues décantées résultant du décanteur 63. Le filtrat ou "surnageant" du décanteur 63 ainsi que le filtrat de l'épaississeur 65 sont transférés par des conduites 67 et 68 et réunis en une conduite 69 à un appareil de floculation d'eaux usées 70 qui reçoit à titre principal des eaux usées par une canalisation 71. Cet appareil de floculation de type classique est équipé de moyens de brassage 72 et d'une conduite d'introduction de floculants 73 qui peut être par exemple du sulfate d'aluminium; les eaux ainsi traitées sont envoyées par une conduite 74 à un clarificateur 75 dont le filtrat constitue les eaux clarifiées renvoyées par une canalisation 76 vers la rivière tandis que les boues décantées sont renvoyées par une canalisation 77 à l'épaississeur 65.

Les produits résultant de l'épaississeur 65 passent ensuite dans un appareil de déshydratation mécanique 78 puis comme précédemment vers un appareil d'incinération 79 et/ou une décharge 79' de la boue activée ou des cendres résultant de l'incinération 79.

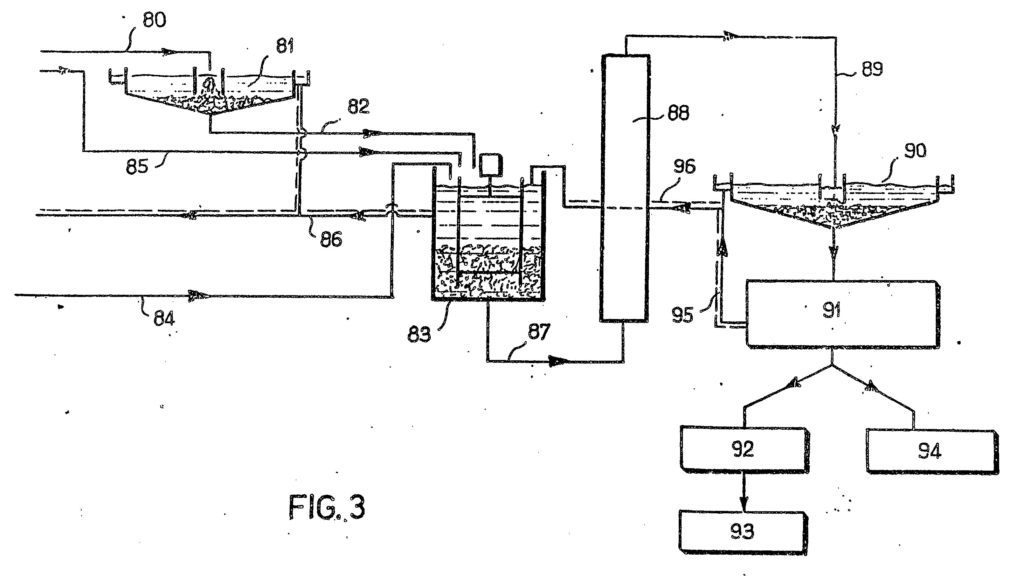

En se référant à la figure 3, on décrit maintenant une installation de traitement des boues de fosses septiques qui est associée à une installation de traitement biologique des boues par conditionnement thermique. Ici, les boues de fosses septiques parviennent par une canalisation 80 dans un décanteur 81 dont les boues décantées sont envoyées par une canalisation 82 à un épaississeur 83 qui collecte également via une canalisation 84 les boues du bassin de traitement biologique des eaux usées. On peut également éviter pour une partie des boues de fosses septiques le passage dans le décanteur 81 et amener celles-ci via une canalisation 85 directement dans l'épaississeur 83. Le filtrat ou "surnageant" dans l'épaississeur 83 est renvoyé par une canalisation 86 dans le bassin principal de traitement biologique. Les boues soutirées à la base de l'épaississeur 83 sont transférées par une canalisation 87 dans une tour de conditionnement thermique 88 travaillant par exemple à 180° pendant quelques heures après quoi ces boues sont transférées par une canalisation 89 dans un décanteur de boues conditionnées 90. Les boues issues de ce

décanteur 90 sont de façon habituelle traitées dans un appareil de déshydratation 91 puis soit incinérées en 92 et déchargées en 93, soit directement déchargées en 94. Le filtrat de l'appareil de déshydratation est transféré par une canalisation 95 vers une canalisation 96 collectant le filtrat du décanteur 90, pour être renvoyé vers l'épaississeur 83.

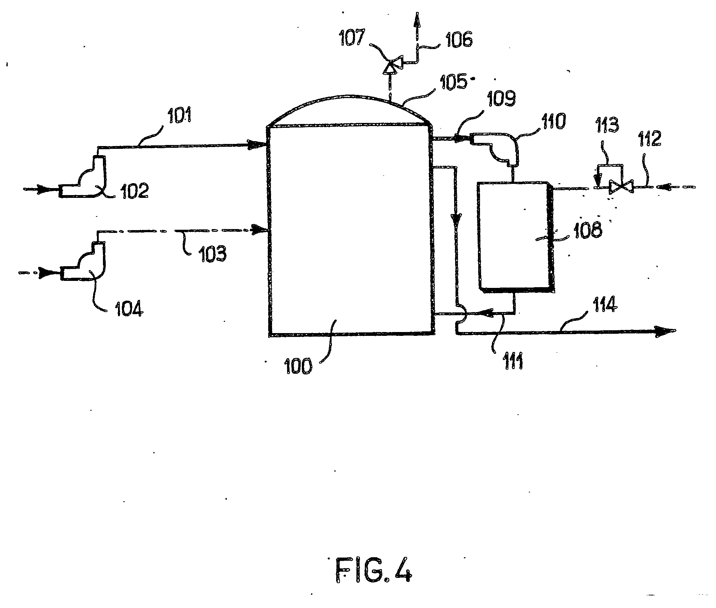

En se référant à la figure 4, on décrit maintenant une installation de traitement des boues de fosses septiques comportant un réacteur principal 100 dans lequel parviennent par une canalisation 101 à pompe 102 les boues de fosses septiques et par une canalisation 103 à pompe 104, les boues activées de recyclage servant à l'ensemencement. Le réacteur 100 est également équipé ici d'un couvercle 105 avec une conduite de mise à l'air libre 106 à soupape 107. La particularité de ce réacteur est que l'oxygénation des boues activées s'effectue dans un oxygénateur auxiliaire 108 dans lequel les boues sont amenées dans le sens verticalement descendant par une canalisation 109 à pompe 110 pour être recyclées dans le réacteur par une canalisation 111, l'oxygénateur étant équipé d'une conduite d'amenée 112 à vanne régulatrice de débit 113 reliée à une source d'oxygène.

L'oxygénateur 108 peut être constitué par différents types de moyens de transfert d'oxygène, par exemple un venturi, une autre colonne à bulles, un éjecteur, etc.

Les boues traitées sont, comme précédemment, envoyées par une canalisation 114 à différents postes de traitement ultérieurs.

A titre d'exemples, on donne ci-après les résultats suivants:

VOLUME DU BASSIN BIOLOGIQUE : 13 m³

| EXEMPLES | | N° 1 | N° 2 | N° 3 |
|---|---|---|---|---|
| DEBIT | m³ j⁻¹ | 18 | 21,5 | 18 |
| DBO entrée | kg.m⁻³ | 7,446 | 11,250 | 13,700 |
| DBO sortie | '' '' | 0,600 | 2,080 | 2,200 |
| DBO éliminée | % | 91,9 | 81,5 | 83,9 |
| DCO entrée | kg.m⁻³ | 24,608 | 29,913 | 29,213 |
| DCO sortie | '' '' | 1,760 | 3,148 | 3,951 |
| DCO éliminée | % | 92,8 | 89,5 | 86,5 |
| Matière sèche entrée extrait 100°C kg.m⁻³ | | 14,95 | 28,77 | 15,70 |
| Matière sèche, boue activée '' '' | | 14,90 | 16,0 | 16,70 |
| Matière volatile boue activée % | | 73,3 | 76,0 | 77,2 |
| Charge Massique kg DBO₅.kg⁻¹MV*. j⁻¹ | | 0,867 | 1,267 | 1,326 |
| Charge volumique kg DBO₅.m⁻³ | | 9,5 | 12,7 | 15,9 |
| Matière sèche, boue décantée kg.m⁻³. j⁻¹ | | 43,8 | 63,7 | 54,6 |
| Indice de Mohlmann ml.g⁻¹ | | 39 | 40 | 41 |
| Consommation en oxygène m³. j⁻¹ | | 30,7 | 62,3 | 44,9 |
| Oxygène purgé m³. j⁻¹ | | 7,34 | 11,7 | 13,15 |
| Rendt. d'utilisation de l'oxygène % | | 76,09 | 75,00 | 70,70 |
| Temps de séjour/Age des boues h | | 17,3 | 14,5 | 17,3 |
| Consommation en oxygène kgO₂ par kg DBO éliminée | | 0,355 | 0,316 | 0,216 |
| kg DCO éliminée | | 0,0746 | 0,108 | 0.0953 |
| kg matière sèche traitée | | 0,114 | 0,100 | 0,159 |
| m³ de boue traitée. | | 1,70 | 2,99 | 2,49 |

L'invention s'applique au traitement de boues de fosses septiques.
*MV signifie ''matières volatiles''

## Revendications

1. Procédé de traitement biologique par boues activées des matières de vidanges ou boues de fosses septiques présentant les caractéristiques suivantes:

. matières sèches : 6 à 40 kg/m³

. matière volatile : 65 à 80 % des matières sèches

. DBO$_{(5)}$ : au moins 5 à 15 kg/m³

. DCO (bichromate) : 10 à 45 kg/m³

du genre où l'on soumet les dites boues de fosses septiques ou matières de vidanges à un traitement d'activation biologique avec un gaz ayant une teneur élevée en oxygène d'au moins 50 % en volume pendant une durée d'au moins 5 heures, caractérisé en ce qu'au début du traitement on ensemence les boues de fosses septiques à traiter avec une boue activée, provenant d'une station de traitement biologique des eaux usées par le procédé dit des boues activées, ayant une teneur en matière sèche de 6 à 15 kg par m³, le taux d'ensemencement étant au minimum de 0,6 kg de matière sèche par m³ de boue à traiter, et en ce que les dites boues de fosse septique ensemencées sont soumises audit traitement d'oxydation biologique avec une énergie de brassage et un débit dudit gaz à teneur élevée en oxygène tels que la teneur en oxygène dissous dans les dites boues de fosses septiques est d'au moins 10 g/m³, et en ce qu'un procède à une décantation continue des boues de fosses septiques traitées, produisant, d'une part, une boue biologique décantée ayant un indice de Mohlman compris entre 30 et 60 et un filtrat clair ayant une DBO de 0,3 à 2,5 kg/m³ et une DCO de 0,5 à 4 kg/m³, la quantité d'oxygène introduite étant inférieure à 0,5 kg par kg de matière sèche introduite.

2. Procédé de traitement des boues de fosses septiques selon la revendication 1, caractérisé en ce que l'énergie de brassage et le débit de gaz à teneur élevée en oxygène sont tels que la teneur en oxygène dissous dans les boules de fosses septiques en cours de traitement est comprise entre 15 et 25 g/m³.

3. Procédé de traitement des boues de fosses septiques selon la revendication 1, caractérisé en ce que la durée du traitement des boues de fosses septiques est inférieure à 24 heures.

4. Procédé de traitement des boues de fosses septiques selon l'une quelconque des revendications 1 à 3, caractérisé en ce que les boues des fosses septiques sont traitées dans un réacteur avec oxygénation par circulation des boues dans un oxygénateur auxiliaire du type venturi-éjecteur, ou colonne à bulles.

## Patentansprüche

1. Verfahren zur biologischen Behandlung von Fäkalien oder Schlämmen septischer Senkgruben mit den folgenden Eigenschaften:

Trockensubstanz: 6 bis 40 kg/m³

Flüchtige Bestandteile: 65 bis 80 % der Trockensubstanz

BSB$_5$: wenigstens 5 bis 15 kg/m³

CSB (Bichromat): 10 bis 45 kg/m³

mit Belebtschlämmen, wobei man die Schlämme septischer Senkgruben oder Fäkalien einer biologischen Aktivierungsbehandlung mit einem Gas mit einem erhöhten Sauerstoffgehalt von wenigstens 50 Volumen-% während einer Dauer von wenigstens 5 Stunden unterzieht, dadurch gekennzeichnet, daß man am Anfang der Behandlung die zu behandelnden Schlämme septischer Senkgruben mit einem Belebtschlamm impft, der von einer Station zur biologischen Behandlung von Abwässern nach dem Belebtschlammverfahren kommt und einen Gehalt an Trockensubstanz von 6 bis 15 kg/m³ hat, wobei die Impfungsmenge wenigstens 0,6 kg Trockensubstanz je Kubikmeter des zu behandelnden Schlammes beträgt, daß man diese geimpften Schlämme septischer Klärgruben der biologischen Oxidationsbehandlung mit solcher Rührenergie und mit solchem Durchsatz des genannten Gases mit erhöhtem Sauerstoffgehalt unterzieht, daß der Gehalt an gelöstem Sauerstoff in diesen Schlämmen septischer Senkgruben wenigstens 10 g/m³ beträgt, und daß man eine fortgesetzte Klärung der behandelten Schlämme septischer Senkgruben durchführt und so einerseits einen biologischen geklärten Schlamm mit einem Mohlman-Index zwischen 30 und 60 und andererseits ein klares Filtrat mit einem BSB von 0,3 bis 2,5'kg/m³ und einem CSB von 0,5 bis 4 kg/m³ erzeugt, wobei die eingeführte Sauerstoffmenge unter 0,5 kg/kg der eingeführten Trockensubstanz ist.

2. Verfahren zur Behandlung von Schlämmen septischer Senkgruben nach Anspruch 1, dadurch gekennzeichnet, daß die Rührenergie und der Durchsatz des Gases mit erhöhtem Sauerstoffgehalt derart sind, daß der gelöste Sauerstoffgehalt in den Schlämmen septischer Senkgruben im Laufe der Behandlung zwischen 15 und 25 g/m³ liegt.

3. Verfahren zur Behandlung von Schlämmen septischer Senkgruben nach Anspruch 1, dadurch gekennzeichnet, daß die Dauer der Behandlung der Schlämme septischer Senkgruben unter 24 Stunden liegt.

4. Verfahren zur Behandlung von Schlämmen septischer Senkgruben nach einem der Ansprüche 1 bis 3, dadurch gekennzeichnet, daß man die Schlämme septischer Senkgruben in einem Reaktor mit Oxidation durch Zirkulation der Schlämme in einer Hilfssauerstoffbehandlungsvorrichtung vom Venturi-Ejektortyp oder Blassensäulentyp behandelt.

## Claims

1. Method for the biological processing by activated sludge of "night soil" or septic tank sludge, having the following characteristics:

| | | |
|---|---|---|
| dry material | : | 6—40 Kg/m³ |
| volatile material | : | 65—80% of dry material |
| $DBO_{(5)}$ | : | at least 5—15 Kg/m³ |
| DCO (bichromate) | : | 10—45 Kg/m³ |

of the type where the said septic tank sludge or night soil undergoes a biological activation process with a gas having a high oxygen content of at least 5% in volume for a duration of at least 5 hours, characterised in that at the start of the process the septic tank sludges to be processed are seeded with an activated sludge, emanating from a station for waste water biological processing by the activated mud process, said mud having a dry material content of 6 to 15 Kg per m³, the rate of seeding being at least 0.6 Kg of dry material per m³ of sludge to be processed, and in that the said seeded septic tank sludges are submitted to the said biological oxidation process with a mixing energy and an output of the said high oxygen content gas such that the content of oxygen dissolved in the said septic tank sludges is at least $109/m^3$ and in that furthermore the processed septic tank sludges are continuously decanted, producing on the one hand a decanted biological sludge having a Mohlman index comprised between 30 and 60 and a clear filtrate having a DBO of 0·3 to 2·5 Kg/m³ and a DCO of 0·5 to 4 Kg/m³, the quantity of oxygen being introduced being less than 0·5 Kg per Kg of dry material introduced.

2. Method for processing septic tank sludges according to claim 1, characterised in that the mixing energy and the output of high oxygen content gas are such that the content of oxygen dissolved in the septic tank sludges in the course of processing is comprising between 15 and 25 g/m³.

3. Method for processing septic tank sludges according to claim 1, characterised in that the duration of processing of the septic tank sludges is less than 24 hours.

4. Method for processing septic tank sludges according to any one of claims 1 to 3, characterised in that the septic tank sludges are processed in a reactor with oxygenation by circulation of the sludges in an auxiliary oxygenator of the venturi ejector or bubble column type.

FIG.1

FIG.2

0011573

FIG. 3

FIG.4